# EUROPÄISCHE PATENTSCHRIFT

(11) **EP 3 265 245 B1**
(45) Veröffentlichungstag und Bekanntmachung des Hinweises auf die Patenterteilung: **30.03.2022**
(21) Anmeldenummer: 16707379.0
(22) Anmeldetag: 03.02.2016
(51) Int. Cl.: B06B 1/06, G10K 11/00, G01H 11/08

(54) **SCHALLWANDLER ZUM EMPFANGEN VON WASSERSCHALLDRUCKWELLEN, SCHALLWANDLERVORRICHTUNG UND SONAR**
ACOUSTIC TRANSDUCER FOR RECEIVING WATERBORNE SOUND SHOCK WAVES, ACOUSTIC TRANSDUCER DEVICE, AND SONAR
TRANSDUCTEUR ACOUSTIQUE POUR RECEVOIR DES ONDES DE PRESSION ACOUSTIQUE DE L'EAU, DISPOSITIF DE TRANSDUCTEUR ACOUSTIQUE ET SONAR

(30) Priorität: 06.03.2015 DE 102015103306
(43) Veröffentlichungstag der Anmeldung: 10.01.2018
(73) Patentinhaber: ATLAS ELEKTRONIK GmbH, 28309 Bremen (DE)
(72) Erfinder: BUSCH, Rainer, 26131 Oldenburg (DE)
(74) Vertreter: thyssenkrupp Intellectual Property GmbH
(86) Internationale Anmeldenummer: PCT/DE2016/100047
(87) Internationale Veröffentlichungsnummer: WO 2016/141913

(56) Entgegenhaltungen:
- WO-A2-01/31686
- DE-A1- 19 928 765
- US-A- 4 616 152
- US-A- 5 691 960
- US-B1- 6 262 517
- US-B1- 6 288 477

## Beschreibung

Die Erfindung betrifft einen Schallwandler zum Empfangen von Wasserschalldruckwellen, wobei der Schallwandler ein akustisches Piezokomposit-Wandlerelement mit einem keramischen Filament oder mehreren keramischen Filamenten und eine Verfüllmasse aufweist, wobei das keramische Filament oder die keramischen Filamente von der Verfüllmasse umgeben ist oder sind.

Die Empfindlichkeit eines Schallwandlers zum Senden und/oder Empfangen von akustischen Unterwasserschallsignalen wird durch das Material des Schallwandlers und das umgebende Material beeinflusst. Z.b. US 6 262 517 B1 offenbart einen Schallwandler zum Empfang von Wasserschalldruckwellen, wobei der Schallwandler ein akustisches Piezokomposit-Wandlerelement mit einem keramischen Filament oder mehreren keramischen Filamenten und eine Verfüllmasse aufweist, wobei das keramische Filament oder die keramischen Filamente von der Verfüllmasse umgeben ist oder sind, wobei in einer Schalldruckrichtung eine erste Druckplatte vor dem akustischen Piezokomposit-Wandlerelement angeordnet ist, sodass ein auftreffender Schalldruck von der Druckplatte auf das keramische Filament oder die keramischen Filamente aufgeprägt wird.

Unterschiedliche Materialien, welche in der Umgebung eines Schallwandlers (beispielsweise Empfänger) in einem Unterwasserfahrzeug eingebaut sind, können den Schalldruck reflektieren und/oder absorbieren. Im Falle der Absorption wird der auf ein akustisches Wandlerelement des Schallwandlers auftreffende Schalldruck vermindert und somit die Empfindlichkeit des Schallwandlers erniedrigt. Im Falle der Reflexion durch umgebendes Material wird der auf den Schallwandler auftreffende Schalldruck und somit die die Empfindlichkeit des Schallwandlers erhöht.

In Unterwasserfahrzeugen ist üblicherweise einem Schallwandler ein akustisches Absorbermaterial nachgeschaltet, welcher Schalleinflüsse aus dem rückwärtigen Raum des Schallwandlers unterdrücken soll.

Zudem besteht die Abhängigkeit, dass je höher die Bandbreite der Frequenz eines Schallwandlers ist, desto höher ist seine Auflösung der Frequenz, das bedeutet der kleinste Frequenzabstand, bei dem noch zwei Frequenzen von einander unterschieden werden können. Gleichzeitig verringert sich jedoch mit der Bandbreite die Empfindlichkeit des Schallwandlers. Zur Optimierung der Eigenschaften eines Schallwandlers muss üblicherweise ein Kompromiss gewählt werden.

Bei Verwenden eines Vollkeramik-Schallwandlers liegt ein schmalbandiges Ausgangssignal der Keramik mit einer höheren Intensität vor, während bei einem Piezokomposit-Schallwandler mit mehreren dünnen Keramikelementen ein breitbandiges Ausgangssignal der Kompositkeramik mit geringerer Intensität auftritt. Nach oben beschriebener Abhängigkeit ist dadurch mit einer geringeren Empfindlichkeit von Piezokomposit-Schallwandlern zu rechnen.

Andererseits weist ein Piozokomposit-Schallwandler eine gute Anpassungsfähigkeit an das Übertragungsmedium Wasser auf, sodass der Schall besser eindringen kann. Im Gegensatz dazu tritt bei einem Vollkeramik-Schallwandler ein großer Impedanzsprung zwischen Wasser und der Vollkeramik auf, sodass der Schall schlechter in die Vollkeramik eindringen kann.

Aufgabe der Erfindung ist es, den Stand der Technik zu verbessern.

Gelöst wird die Aufgabe durch einen Schallwandler zum Empfangen von Wasserschalldruckwellen, wobei der Schallwandler ein akustisches Piezokomposit-Wandlerelement mit einem keramischen Filament oder mehreren keramischen Filamenten und einer Verfüllmasse aufweist, wobei das keramische Filament oder die keramischen Filamente von der Verfüllmasse umgeben ist oder sind und in einer Schalldruckrichtung eine erste Druckplatte aus glasfaserverstärktem Kunststoff vor dem akustischen Piezokomposit-Wandlerelement angeordnet ist, sodass ein auftreffender Schalldruck von der Druckplatte auf das keramische Filament oder die keramischen Filamente aufgeprägt wird und somit die Empfindlichkeit des Schallwandlers erhöht wird, dadurch gekennzeichnet, dass der Volumenanteil V der keramischen Filamente zwischen 20% bis 30% beträgt.

Durch die Anordnung einer ersten Druckplatte in Schalldruckrichtung vor dem akustischen Piezokomposit-Wandlerelement wird ein auftreffender Schalldruck von der Druckplatte auf das keramische Filament oder die keramischen Filamente übertragen.

Somit wird ein Großteil des Schalldrucks, welcher auf die Fläche der Druckplatte auftrifft, direkt von der Druckplatte auf das keramische Filament oder die keramischen Filamente aufgeprägt. Dabei ist zu beachten, dass die Querschnittsfläche der Filamente eine deutlich geringere (Summen-)Fläche aufweist als die Schalldruckplatte. Dadurch wird zum einen der Schalldruck von der Druckplatte auf mehrere keramische Filamente übertragen. Zum anderen wird durch den Übergang von der größeren Fläche der Druckplatte auf die kleineren Flächen der keramischen Filamente der Druck auf die Filamente entsprechend größer und es treten weniger Reflektionen auf. Dadurch kann die Empfindlichkeit des Schallwandlers deutlich erhöht werden.

Somit wird die eingangs beschriebene geringere Intensität des breitbandigen Frequenzsignals eines Piezokomposit-Wandlers durch die vorgeschaltete Druckplatte angehoben und die Empfindlichkeit des Piezokomposit-Wandlers verbessert

Ein wesentlicher Gedanke der Erfindung beruht darauf, dass durch das Vorschalten einer Druckplatte vor dem Schallwandler und durch das Aufprägen des auftreffenden Schalldrucks von der Druckplatte auf die keramischen Filamente die Empfindlichkeit des Schallwandlers erhöht wird.

Somit können die Eigenschaften des Schallwandlers bezüglich dessen Bandbreite, Auflösung und Empfindlichkeit eingestellt werden.

Zudem kann es vorteilhaft sein, wenn die Druckplatte größer als die Wellenlänge der auftreffenden Schallwelle ist. Dadurch wird die Schallwelle gleichphasig reflektiert und dicht vor der Abdeckplatte tritt eine maximale Erhöhung des Schalldruckpegels um 6dB als sogenannter Druckstau auf, da sich die Amplituden des einfallenden und reflektierenden Schalls gleichphasig addieren.

Folgendes Begriffliche sei erläutert:

Ein "Schallwandler" oder ein Hydrophon ist insbesondere ein Gerät, welches ein akustisches Signal als Schallwechseldrücke in elektrische Spannung umwandelt oder umgekehrt elektrische Signale in akustische Signale umwandelt. Beispielsweise wird ein Hydrophon unter Wasser eingesetzt, um dort Wasserschallgeräusche aufzunehmen. Hierbei wandelt ein Hydrophon den Wasserschall in eine dem Schalldruck entsprechende elektrische Größe.

Unter "Wasserschalldruckwelle" wird insbesondere die Ausbreitung von Schallwellen als Druckwellen im Wasser verstanden. Technische Anwendungen für Wasserschalldruckwellen sind insbesondere die Kommunikation, Navigation und/oder Ortung sowie Messung von physikalischen, chemischen und biologischen Größen. Der verwendete Frequenzbereich kann insbesondere in einem Bereich von ca. 10Hz bis 1MHz liegen.

Ein "akustisches Piezokomposit-Wandlerelement" ist insbesondere ein Wandlerelement, welches Verbundwerkstoffe aufweist, insbesondere ein piezoelektrisches, keramisches Filament oder mehrere piezoelektrische, keramische Filamente und eine Verfüllmasse. Insbesondere im Ultraschallbereich im Wasser werden Piezowandler eingesetzt. Das keramische Filament als Piezoelement erzeugt bei Einwirken eines mechanischen Drucks eine elektrische Spannung oder führt bei Anlegen einer elektrischen Spannung eine mechanische Bewegung aus. Das Piezokomposit-Wandlerelement kann insbesondere unterschiedliche Anteile an keramischen Filamenten aufweisen, wobei insbesondere ein Filamentanteil von 20% bis 30% vorteilhaft ist. Das akustische Piezokomposit-Wandlerelement kann insbesondere quadratische und/oder rechteckige und/oder ovale und/oder runde und/oder elliptische Formen annehmen.

Unter einem "keramischen Filament" wird insbesondere eine dünne und/oder fadenförmige keramische Struktur verstanden. Das keramische Filament kann insbesondere die Form von Stäbchen, Zylindern, Rohren und/oder Platten annehmen. Bei Auftreffen und/oder Aufprägen eines Schalldrucks wird das keramische Filament elastisch verformt, wobei eine Änderung der elektrischen Polarisation und somit ein Auftreten einer elektrischen Spannung am keramischen Festkörper erfolgt. Umgekehrt verformt sich das keramische Filament bei Anlegen einer elektrischen Spannung und gibt einen mechanischen Druck ab. Somit kann der Schallwandler mit dem akustischen Piezokomposit-Wandlerelement sowohl als Schallempfänger als auch als Schallsender ausgebildet sein.

Unter einer "Verfüllmasse" wird insbesondere eine Masse zum Verfüllen des Raumes um ein keramisches Filament oder um mehrere keramische Filamente eines akustischen Piezokomposit-Wandlerelementes verstanden. Hierbei kann es sich um Kunststoffmasse oder ein Kunstharz handeln. Die elastischen Eigenschaften der Verfüllmasse lassen sich insbesondere durch Zugabe von leichten und/oder schweren Füllstoffen akustisch optimieren.

Unter "Schalldruckrichtung" wird vorliegend insbesondere die Richtung verstanden, aus der eine Schallquelle eine Schallintensität abstrahlt, welche von einem Schallwandler empfangen wird.

Als "Schalldruck" werden insbesondere die Druckschwankungen eines kompressiblen Schallübertragungsmediums, insbesondere Wasser, bezeichnet, die bei der Ausbreitung von Schall auftreten. Der Schalldruck ist insbesondere der Wechseldruck, der dem statischen Druck des umgebenden Mediums, insbesondere Wasser, überlagert ist.

Eine "Druckplatte" ist insbesondere eine Platte, die vor dem akustischen Piezokomposit-Wandlerelement angeordnet ist und den auftreffenden Schalldruck auf das keramische Filament oder die keramischen Filamenten des akustischen Piezokomposit-Wandlerelementes überträgt. Dazu weist die Druckplatte insbesondere abweichende Materialeigenschaften im Vergleich zum umgebenen Material insbesondere dem akustischen Piezokomposit-Wandlerelement und/oder der Verfüllmasse und/oder Wasser auf, wodurch ein Sprung der akustischen Impedanz auftritt. Durch die Druckplatte erfolgt insbesondere eine Reflektion und/oder eine Verzögerung des auftreffenden Schall(druck)s statt, sodass auf der Seite des auftreffenden Schall(druck)s eine Schalldruckerhöhung auftritt.

Die "Empfindlichkeit" eines Schallwandlers ist insbesondere eine Maß für die erzeugte elektrische Spannung bezogen auf dem einwirkenden Schalldruck bei einer bestimmten Frequenz bei einem Schallempfänger oder ein Maß für die angelegte Spannung bezogen auf den erzeugten Schalldruck bei einer bestimmten Frequenz bei einem Schallsender. Die Empfindlichkeit lässt sich insbesondere auch als Übertragungsfaktor angeben, bei dem die Ausgangsspannung (als Leerlaufspannung) im Verhältnis zum einfallenden Schalldruck für einen Empfänger angegeben wird.

In einer weiteren Ausführungsform des Schallwandlers ist in der Schalldruckrichtung hinter dem akustischen Piezokomposit-Wandlerelement eine zweite Druckplatte angeordnet.

Die zweite Druckplatte wirkt als Gegendruckplatte zur ersten Druckplatte, sodass der Schalldruck auf die zwischen beiden Druckplatten angeordneten keramischen Filamente weiter erhöht wird.

Zudem verhindert die zweite Druckplatte, dass der an der Vorderseite aufgebaute Schalldruck über die keramischen Filamente an das nachfolgende Trägermaterial übertragen und durch dessen elastische Verformung abgebaut wird.

Somit wird auch der auf der Schalldruckrichtung abgewandten Seite des akustischen Piezokomposit-Wandlerelementes auftreffende Schalldruck von der zweiten Druckplatte auf das keramische Filament oder die keramischen Filamente aufgeprägt.

Eine "zweite Druckplatte" entspricht in ihren Eigenschaften der oben beschriebenen ersten Druckplatte und unterscheidet sich von der ersten insbesondere dadurch, dass diese in der Schalldruckrichtung hinter dem akustischen Piezokomposit-Wandlerelement angeordnet ist.

Um einen hohen Schalldruck auf das akustische Piezokomposit-Wandlerelement aufzuprägen, weist eine der Druckplatten oder weisen beide Druckplatten des Schallwandlers ein Material, GFK, mit einer Schallkennimpedanz von kleiner der fünffachen Schallkennimpedanz von Wasser auf, insbesondere von kleiner der dreifachen Schallkennimpedanz von Wasser, bevorzugt von kleiner der eineinhalbfachen Schallkennimpedanz von Wasser.

Durch die Verwendung eines Materials mit einer Schallkennimpedanz von kleiner der fünffachen Schallkennimpedanz von Wasser, wird der auftreffende Schalldruck durch die Druckplatte erhöht und dem akustischen Piezokomposit-Wandlerelement aufgeprägt, sodass die Empfindlichkeit des Schallwandlers erhöht wird.

Eine "Schallkennimpedanz" (auch als Wellenwiderstand des Mediums bezeichnet) ist insbesondere eine physikalische Größe, welche über das Verhältnis von Schalldruck zu Schallschnelle definiert ist. Werden Schallwellen vom Wasser in die Druckplatte übertragen, so werden diese an der Grenzfläche umso stärker reflektiert, je größer die Differenz der Schallkennimpedanzen beider Medien ist. Durch einen möglichst großen Impedanzsprung an der reflektierenden Grenzfläche wird der auftreffende Schalldruck weiter erhöht und aufgebaut.

Mit "GFK" wird insbesondere glasfaserverstärkter Kunststoff bezeichnet, welcher ein Faser-Kunststoffverbund aus einem Kunststoff und Glasfasern ist. Als Matrix werden insbesondere duroplastische (zum Beispiel Polyesterharz oder Epoxidharz) und/oder auch thermoplastische (zum Beispiel Polyamid) Kunststoffe verwendet.

Hierbei ist eine "Faser" insbesondere ein im Verhältnis zur Länge dünnes und flexibles Gebilde, welches aus einem Faserstoff besteht. Vorliegend ist das Verhältnis von Faserlänge zu Faserdurchmesser mindestens 3:1 oder bevorzugt mindestens 10:1. Insbesondere haben Fasern ein Verhältnis von Länge zu Durchmesser von 1000:1. Durch das Längen-Durchmesser-Verhältnis verleihen die Fasern dem Werkstoff die nötige (reversible) Flexibilität. Vorliegend können insbesondere Glasfaser eingesetzt werden, wobei es vorteilhaft ist, dass durch Einstellen der Anzahl der Fasern die schallreflektierenden Eigenschaften der Druckplatte eingestellt werden können. Des Weiteren kann hier die hohe Bruchdehnung und die elastische Energieaufnahme der Glasfasern in Verbund mit der Kunststoffmatrix ausgenutzt werden. Zusätzlich kann das Korrosionsverhalten von glasfaserverstärktem Kunststoff im Meerwasser vorteilhaft genutzt werden.

In einer weiteren Ausführungsform des Schallwandlers ist eine der Druckplatten oder sind beide Druckplatten mittels eines leitfähigen Klebstoffes mit dem akustischen Piezokomposit-Wandlerelement verbunden.

Durch den leitfähigen Klebstoff wird eine feste Verbindung zwischen der Druckplatte und dem akustischen Piezokomposit-Wandlerelement erreicht, insbesondere zwischen der Druckplatte und den keramischen Filamenten. Dadurch kann der auf die Druckplatte treffende Schalldruck von der Druckplatte den keramischen Filamenten aufgeprägt werden, ohne dass wesentliche Schalldruckverluste auftreten.

Zusätzlich dient der leitfähige Klebstoff zur Zu- oder Abführung der elektrischen Spannung an den piezoelektrischen, keramischen Filamenten.

Besonders vorteilhaft ist es, wenn durch Verwendung eines leitfähigen Klebstoffes beide Eigenschaften, die der Verbindung durch Klebung und der leitenden Schicht, integriert sind.

Bevorzugt ist der leitfähige Klebstoff als dünne, harte Schicht ausgebildet, sodass dieser die akustischen Eigenschaften zwischen der Druckplatte und dem akustischen Piezokomposit-Wandlerelement unbeeinflusst lässt.

Unter einem "leitfähigen Klebstoff" (auch Leitkleber genannt) wird insbesondere ein elektrisch leitfähiger Klebstoff verstanden, welcher insbesondere aus dem Klebmittel und anorganischen, elektrisch-leitfähigen Füllstoffen besteht. Der Anteil der elektrisch-leitfähigen Füllstoffe liegt bei 10% bis 90%, insbesondere bei ca. 30%. Die metallischen Füllstoffe können Silber (Silberleitkleber), Gold, Palladium, Nickel und/oder Platin aufweisen. Bevorzugt wird insbesondere Silberleitkleber eingesetzt, wobei es sich insbesondere um silbergefüllten (70% bis 80%) Klebstoff auf Epoxidharzbasis handelt.

Damit der Schallwandler als Sender und/oder Empfänger eingesetzt werden kann, ist über den leitfähigen Klebstoff eine Spannung dem keramischen Filament oder den keramischen Filamenten aufprägbar und/oder abgreifbar.

In einer weiteren Ausführungsform des Schallwandlers ist die Verfüllmasse ein Kunststoffharz, insbesondere ein Epoxidharz.

Somit kann das keramische Filament oder können mehrere keramische Filamente von der Verfüllmasse im akustischen Piezokomposit-Wandlerelement eingebettet werden.

Durch ein Kunststoffharz, insbesondere ein Epoxidharz, als Verfüllmasse, welche akustisch "weich" ist, gelangt die Schallenergie, welche nicht von der Druckplatte auf das keramische Filament oder mehrere keramische Filamente aufgeprägt wird, in das akustisch transparente Harz. Das Harz dient insbesondere zur seitlichen Entkopplung der keramischen Filamente.

Somit ist es vorteilhaft, dass querlaufende Schallwellen und/oder von dem Umgebungsmaterial reflektierte Schallwellen, welche nicht dem keramischen Filament oder den keramischen Filamenten durch die Druckplatte aufgeprägt werden, von der Verfüllmasse "durchgelassen" werden.

Ein "Kunststoffharz" (auch Kunstharz genannt) wird insbesondere durch Polymerisations-, Polyadditions- oder Polykondensationsreaktionen synthetisch hergestellt. Das Kunststoffharz ist insbesondere aus Naturstoffen, natürlichen Harzen oder durch Veresterung und Verseifung natürlicher Harze hergestellt. Üblicherweise besteht Kunststoffharz insbesondere aus zwei Hauptkomponenten (Harz und Härter), durch deren Vermischen eine reaktionsfähige Harzmasse entsteht. Nach Härtung des Kunststoffharzes besteht insbesondere ein unschmelzbarer (druckelastischer) Kunststoff. Das Kunststoffharz wird insbesondere im Gussverfahren verarbeitet. Insbesondere ist die Schallkennimpedanz des Kunststoffharzes ca. um den Faktor 10 bis 15 niedriger als die Schallkennimpedanz einer PiezoKeramik.

Unter "Epoxidharz" wird insbesondere Kunststoffharz verstanden, welches Epoxidgruppen aufweist. Dieses ist insbesondere ein härtbares Harz (Reaktionsharz), welches mit einem Härter und gegebenenfalls mit Zusatzstoffen zu einem druckelastischen Kunststoff umgesetzt wird. Das Epoxidharz ist insbesondere Polyether mit in der Regel zwei endstelligen Epoxidgruppen.

Um die Empfindlichkeit des Schallwandlers zu erhöhen und/oder den Schallwandler als Empfänger und/oder zeitgleich als Sender zu verwenden, weist der Schallwandler mehrere akustische Piezokomposit-Wandlerelemente auf.

Mithin kann die Ausführung des Schallwandlers mit mehreren Piezokomposit-Wandlerelementen derart erfolgen, dass die größtmögliche akustische Empfindlichkeit in einem gegebenen Frequenzbereich erreicht wird.

Des Weiteren kann dadurch ein Schallwandler nach den Bedürfnissen des Benutzers ausgeführt werden, beispielsweise können verschiedene Piezokomposit-Wandlerelemente mit unterschiedlichen Bandbreiten der Frequenz und/oder Empfindlichkeiten eingesetzt werden.

In einem weiteren Aspekt wird die Aufgabe gelöst durch eine Schallwandlervorrichtung mit einem zuvor beschriebenen Schallwandler.

Dadurch kann auch die Schallwandlervorrichtung nach den Bedürfnissen des Benutzers ausgeführt werden. Insbesondere kann ein Schallwandler zum Senden und ein weiterer Schallwandler zum Empfangen von Unterwassersignalen verwendet werden.

Zudem kann durch die Parallel- und/oder Reihenschaltung von Schallwandlern die Schallwandlervorrichtung optimiert und deren Empfindlichkeit verbessert werden.

In einem weiteren Aspekt wird die Aufgabe gelöst durch ein Sonar zum Empfangen von Wasserschalldruckwellen, wobei das Sonar einen zuvor beschriebenen Schallwandler oder eine zuvor beschriebene Schallwandlervorrichtung aufweist.

Somit kann eine Ortung von Gegenständen im Raum und unter Wasser mittels ausgesandter und/oder empfangener Schalldruckwellen bei hoher Empfindlichkeit erfolgen. Dies ist insbesondere bei unbekannten Gegenständen mit unbekannter Position unter Wasser hilfreich.

Unter "Sonar" wird insbesondere ein System zur Ortung von Gegenständen im Raum und unter Wasser mittels ausgesandter Schallimpulse verstanden. Dabei kann es sich um ein aktives Sonar handeln, welches selbst ein Signal ausstrahlt oder um ein passives Sonar, welches ausgestrahlte Schallimpulse empfängt. Ebenso kann es sich hierbei um ein Bi- oder Multistatisches Sonar handeln, welches gleichzeitig auf verschiedenen Plattformen senden und empfangen kann.

Dieser Schallwandler und/oder diese Schallwandlervorrichtung sind/ist insbesondere für ein Sonar vorteilhaft, da bei einem Sonar die umgebenden Materialien, wie der akustische Absorber und/oder auch die Materialien des Wasserfahrzeuges, den auftreffenden Schalldruck reflektieren und/oder absorbieren. Somit kann die Empfindlichkeit des Sonars erhöht werden.

In einem zusätzlichen Aspekt der Erfindung wird die Aufgabe gelöst durch ein Wasserfahrzeug, insbesondere ein U-Boot, welches ein zuvor beschriebenes Sonar aufweist.

Insbesondere für ein U-Boot ist es notwendig, dass das Sonar eine hohe Empfindlichkeit zur Navigation und/oder Ortung aufweist.

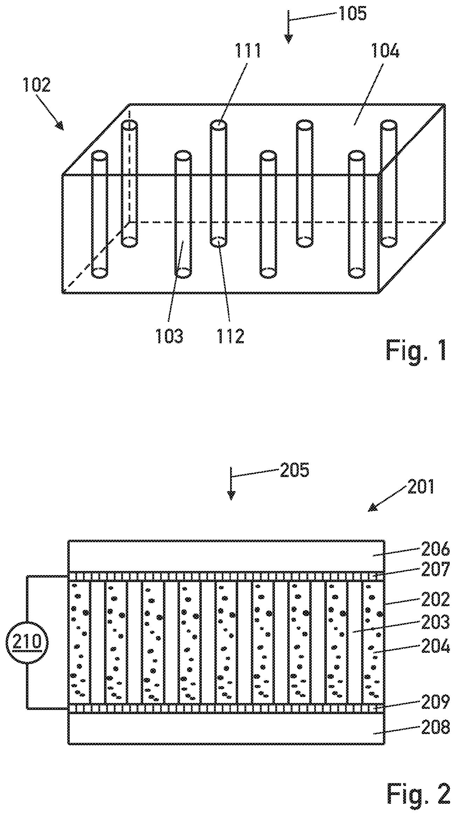

Im Weiteren wird die Erfindung anhand von Ausführungsbeispielen näher erläutert. Es zeigen
- Figur 1: eine stark schematische dreidimensionale Darstellung eines akustischen Piezokomposit-Wandlerelementes,
- Figur 2: eine stark schematische Schnittdarstellung eines Schallwandlers mit einem akustischen Piezokomposit-Wandlerelementes und einer vorderen und einer hinteren Druckplatte und
- Figur 3: eine stark schematische Darstellung der Kennlinien der Empfindlichkeit S über den Volumenanteil V der keramischen Filamente eines Schallwandlers mit und ohne Druckplatte.

Ein akustisches Piezokomposit-Wandlerelement 102 weist eine quadratische Form mit acht darin verteilten keramischen Stäbchen 103 als Piezoelemente auf. Die keramischen Stäbchen 103 sind seitlich von Epoxidharz 104 umgeben. In der Schalldruckrichtung 105 sind die vorderen Querschnittsflächen 111 am vorderen Ende der keramischen Stäbchen 103 nicht mit Epoxidharz 104 umgeben. Ebenso sind die hinteren Querschnittsflächen 112 am anderen Ende der keramischen Stäbchen 103 nicht mit Epoxidharz umgeben.

Ein Schallwandler 201, welcher als Empfänger ausgelegt ist, weist in der Schalldruckrichtung 205 zunächst eine erste GFK-Platte 206, anschließend eine erste Schicht Silberleitkleber 207 und ein Piezokomposit-Wandlerelement 202 auf. Hinter dem Piezokomposit-Wandlerelement 202 folgt in der Schalldruckrichtung 205 eine zweite Schicht Silberleitkleber 209 und anschließend eine zweite GFK-Platte 208.

Acht stäbchenförmige, keramische Filamente 208 sind im Piezokomposit-Wandlerelement 202 seitlich von Epoxidharz 204 umgeben. Die stäbchenförmigen, keramischen Filamente 203 sind über die erste Schicht des Silberleitklebers 207 und die zweite Schicht des Silberleitklebers 209 elektrisch kontaktiert.

In der Schalldruckrichtung 205 trifft eine Schalldruckwelle zunächst auf die erste GFK-Platte 206. Durch die direkte Verklebung der ersten GFK-Platte 206 über die erste Schicht des Silberleitklebers 207 mit den stäbchenförmigen, keramischen Filamenten 203 wird der auftreffende Schalldruck direkt von der GFK-Platte 206 auf die stäbchenförmigen, keramischen Filamente 203 des Piezokomposit-Wandlerelementes 202 aufgeprägt.

Dadurch, dass das Epoxidharz 204 um die stäbchenförmigen, keramischen Filamenten 203 akustisch transparent und druckelastisch ist und somit den Schalldruck von der ersten GFK-Platte 206 nur geringfügig aufnimmt, wird der Schalldruck größtenteils direkt von der GFK-Platte 206 auf die stäbchenförmigen, keramischen Filamenten 203 übertragen.

Da die Fläche der ersten GFK-Platte 206, auf die der Schalldruck auftrifft, deutlich größer ist als die Flächensumme der Querschnittsflächen der stäbchenförmigen, keramischen Filamenten 203, auf welche der Schalldruck aufgeprägt wird, wird der Schalldruck zusätzlich erhöht. Ebenso wird durch die zweite GFK-Platte 208 in Schalldruckrichtung 205 hinter dem Piezokomposit-Wandlerelement 202, welche als Gegendruckplatte wirkt, der Schalldruck auf die stäbchenförmigen, keramischen Filamente 203 erhöht.

Durch Einwirken des Schalldrucks werden die stäbchenförmigen keramischen Filamente 203 in Längsrichtung komprimiert. Dadurch tritt eine Änderung der elektrischen Polarisation und somit eine elektrischen Spannung 210 an den stäbchenförmigen, keramischen Filamenten 203 auf, welche über die erste Schicht Silberleitkleber 207 und die zweite Schicht Silberleitkleber 209 abgegriffen wird.

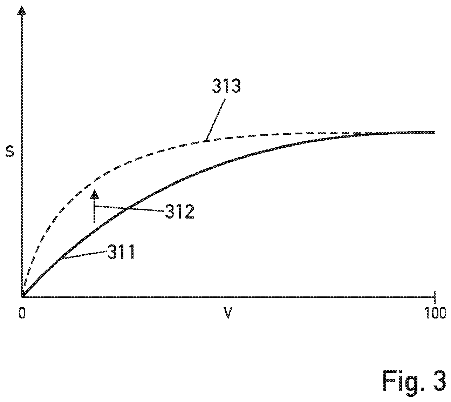

Für einen Piezokomposit-Schallwandler nach dem Stand der Technik ohne Druckplatte ist die Kennlinie der Empfindlichkeit S über den Volumenanteil V der keramischen Filamente 311 schematisch in der Figur 3 dargestellt. Hier wird nur der Schalldruck übertragen, der direkt auf die keramischen Filamente auftrifft. Deshalb ist die Empfindlichkeit S direkt abhängig von der Querschnittsfläche der keramischen Filamente und damit von ihrem Volumenanteil V im Piezokomposit-Schallwandler. Folglich ist aus der Kennlinie der Empfindlichkeit S über den Volumenanteil V der keramischen Filamente ohne Druckplatte 311 ersichtlich, dass bei einem hohen Volumenanteil V der keramischen Elemente die Empfindlichkeit S ihren Maximalwert erreicht.

Die Empfindlichkeit S eines Schallwandlers nach dem Stand der Technik kann nur durch Erhöhung der Anzahl der keramischen Filamente verbessert werden, dadurch verringert sich jedoch die Bandbreite der Frequenz. Um die höchste Empfindlichkeit zu erzielen, muss idealerweise ein Keramikblock als Schallwandler eingesetzt werden, dies hat jedoch bei identischer Geometrie eine schmale Bandbreite zur Folge.

Dagegen wird bei einem erfindungsgemäßen Schallwandler 201 durch die GFK-Platte 206 als vorgeschaltete Druckplatte der gesamte auftreffende Schalldruck in einem deutlich größeren Anteil auf die keramischen Filamente 203 übertragen. Dadurch wird der Schalldruck erhöht und eine Erhöhung der Empfindlichkeit 312 wird insbesondere bereits für geringere Volumenanteile V der keramischen Filamente bei einer hohen Bandbreite erreicht. Wie die Kennlinie der Empfindlichkeit über den Volumenanteil der keramischen Filamente des Schallwandlers mit Druckplatte 313 zeigt, wird bei einem Volumenanteil V von 20% bis 30% der keramischen Filamente bereits annähernd die maximale Empfindlichkeit erzielt (vergleiche Kennlinie 311).

### Bezugszeichenliste

- 102: Piezokomposit-Wandlerelement
- 103: keramisches Stäbchen
- 104: Epoxidharz
- 105: Schalldruckrichtung
- 111: vordere Querschnittsfläche
- 112: hintere Querschnittsfläche
- 201: Schallwandler
- 202: Piezokomposit-Wandlerelement
- 203: stäbchenförmiges, keramisches Filament
- 204: Epoxidharz
- 205: Schalldruckrichtung
- 206: erste GFK-Platte
- 207: erste Schicht Silberleitkleber
- 208: zweite GFK-Platte
- 209: zweite Schicht Silberleitkleber
- 210: Spannung
- 311: Kennlinie der Empfindlichkeit über den Volumenanteil der keramischen Filamente des Schallwandlers ohne Druckplatte
- 312: Erhöhung der Empfindlichkeit
- 313: Kennlinie der Empfindlichkeit über den Volumenanteil der keramischen Filamente des Schallwandlers mit Druckplatte

## Patentansprüche

1. Schallwandler (201) zum Empfang von Wasserschalldruckwellen, wobei der Schallwandler ein akustisches Piezokomposit-Wandlerelement (102, 202) mit einem keramischen Filament (103, 203) oder mehreren keramischen Filamenten (103, 203) und eine Verfüllmasse (104, 204) aufweist, wobei das keramische Filament oder die keramischen Filamente von der Verfüllmasse umgeben ist oder sind, wobei in einer Schalldruckrichtung (105, 205) eine erste Druckplatte aus glasfaserverstärktem Kunststoff (206) vor dem akustischen Piezokomposit-Wandlerelement (102, 202) angeordnet ist, sodass ein auftreffender Schalldruck von der Druckplatte auf das keramische Filament oder die keramischen Filamente aufgeprägt wird, sodass die Empfindlichkeit (312) des Schallwandlers erhöht wird, **dadurch gekennzeichnet, dass** der Volumenanteil V der keramischen Filamente zwischen 20% bis 30% beträgt.

2. Schallwandler nach Anspruch 1, **dadurch gekennzeichnet, dass** in der Schalldruckrichtung hinter dem akustischen Piezokomposit-Wandlerelement eine zweite Druckplatte (208) angeordnet ist.

3. Schallwandler nach einem der vorherigen Ansprüche, **dadurch gekennzeichnet, dass** die Druckplatte, eine der Druckplatten oder beide Druckplatten ein Material, GFK, mit einer Schallkennimpedanz von kleiner der fünffachen Schallkennimpedanz von Wasser aufweisen, insbesondere von kleiner der dreifachen Schallkennimpedanz von Wasser, bevorzugt von kleiner der eineinhalbfachen Schallkennimpedanz von Wasser.

4. Schallwandler nach einem der vorherigen Ansprüche, **dadurch gekennzeichnet, dass** die Druckplatte, eine der Druckplatten oder beide Druckplatten mittels eines leitfähigen Klebstoffes (207, 209) mit dem akustischen Piezokomposit-Wandlerelement verbunden ist oder sind.

5. Schallwandler nach Anspruch 4, **dadurch gekennzeichnet, dass** über den leitfähigen Klebstoff eine Spannung (210) dem keramischen Filament oder den keramischen Filamenten aufprägbar und/oder abgreifbar ist.

6. Schallwandler nach einem der vorherigen Ansprüche, **dadurch gekennzeichnet, dass** die Verfüllmasse ein Kunststoffharz, insbesondere ein Epoxidharz, ist.

7. Schallwandler nach einem der vorherigen Ansprüche, **dadurch gekennzeichnet, dass** der Schallwandler mehrere akustische Piezokomposit-Wandlerelemente aufweist.

8. Schallwandlervorrichtung mit einem Schallwandler nach einem der vorherigen Ansprüche.

9. Sonar zum Empfang von Wasserschalldruckwellen, **dadurch gekennzeichnet, dass** das Sonar einen Schallwandler nach einem der Ansprüche 1 bis 7 oder eine Schallwandlervorrichtung nach Anspruch 8 aufweist.

10. Wasserfahrzeug, insbesondere ein U-Boot, welches ein Sonar nach Anspruch 9 aufweist.

## Claims

1. Sound transducer (201) for receiving waterborne sound pressure waves, wherein the sound transducer comprises an acoustic piezocomposite transducer element (102, 202) with a ceramic filament (103, 203) or a plurality of ceramic filaments (103, 203) and a filling compound (104, 204), wherein the ceramic filament or the ceramic filaments is or are surrounded by the filling compound, wherein a first pressure plate made of glass-fibre-reinforced plastic (206) is arranged upstream of the acoustic piezocomposite transducer element (102, 202) in a sound pressure direction (105, 205), with the result that an impinging sound pressure is impressed from the pressure plate onto the ceramic filament or the ceramic filaments, thus increasing the sensitivity (312) of the sound transducer, **characterized in that** the volume fraction V of the ceramic filaments is between 20% and 30%.

2. Sound transducer according to Claim 1, **characterized in that** a second pressure plate (208) is arranged downstream of the acoustic piezocomposite transducer element in the sound pressure direction.

3. Sound transducer according to either of the preceding claims, **characterized in that** the pressure plate, one of the pressure plates or both pressure plates comprise(s) a material, glass-fibre-reinforced plastic, having a sound characteristic impedance of less than five times the sound characteristic impedance of water, in particular of less than three times the sound characteristic impedance of water, preferably of less than one and a half times the sound characteristic impedance of water.

4. Sound transducer according to one of the preceding claims, **characterized in that** the pressure plate, one of the pressure plates or both pressure plates is or are connected to the acoustic piezocomposite transducer element by means of a conductive adhesive (207, 209).

5. Sound transducer according to Claim 4, **characterized in that** a voltage (210) can be impressed on and/or tapped off from the ceramic filament or the ceramic filaments via the conductive adhesive.

6. Sound transducer according to one of the preceding claims, **characterized in that** the filling compound is a plastic resin, in particular an epoxy resin.

7. Sound transducer according to one of the preceding claims, **characterized in that** the sound transducer comprises a plurality of acoustic piezocomposite transducer elements.

8. Sound transducer apparatus having a sound transducer according to one of the preceding claims.

9. Sonar for receiving waterborne sound pressure waves, **characterized in that** the sonar comprises a sound transducer according to one of Claims 1 to 7 or a sound transducer apparatus according to Claim 8.

10. Watercraft, in particular a submarine, comprising a sonar according to Claim 9.

## Revendications

1. Transducteur acoustique (201) destiné à recevoir des ondes de pression acoustique transmises par l'eau, le transducteur acoustique comportant un élément transducteur piézo-composite acoustique (102, 202) pourvu d'un filament céramique (103, 203) ou d'une pluralité de filaments céramiques (103, 203) et un composé de remplissage (104, 204), le filament céramique ou les filaments céramiques étant entouré(s) par le composé de remplissage, une première plaque de pression (206) en matière synthétique renforcée de fibres de verre étant disposée devant l'élément transducteur piézo-composite acoustique (102, 202) dans une direction de pression acoustique (105, 205) de sorte qu'une pression acoustique incidente est imprimée par la plaque de pression au filament céramique ou aux filaments céramiques de manière à augmenter la sensibilité (312) du transducteur acoustique, **caractérisé en ce que** la proportion en volume V des filaments céramiques est comprise entre 20 % et 30 %.

2. Transducteur acoustique selon la revendication 1, **caractérisé en ce qu'**une deuxième plaque de pression (208) est disposée en aval de l'élément transducteur piézo-composite acoustique par référence à la direction de la pression acoustique.

3. Transducteur acoustique selon l'une des revendications précédentes, **caractérisé en ce que** la plaque de pression, l'une des plaques de pression ou les deux plaques de pression comportent un matériau GRP ayant une impédance acoustique caractéristique inférieure à cinq fois l'impédance acoustique caractéristique de l'eau, notamment inférieure à trois fois l'impédance acoustique caractéristique de l'eau, de préférence inférieure à une fois et demie l'impédance acoustique caractéristique de l'eau.

4. Transducteur acoustique selon l'une des revendications précédentes, **caractérisé en ce que** la plaque de pression, l'une des plaques de pression ou les deux plaques de pression sont reliées à l'élément transducteur piézo-composite acoustique au moyen d'un adhésif conducteur (207, 209).

5. Transducteur acoustique selon la revendication 4, **caractérisé en ce qu'**une tension (210) peut être appliquée et/ou prélevée sur le filament céramique ou les filaments céramiques par le biais de l'adhésif conducteur.

6. Transducteur acoustique selon l'une des revendications précédentes, **caractérisé en ce que** le composé de remplissage est une résine de matière synthétique, notamment une résine époxy.

7. Transducteur acoustique selon l'une des revendications précédentes, **caractérisé en ce que** le transducteur acoustique comporte une pluralité d'éléments transducteurs piézo-composites acoustiques.

8. Dispositif à transducteur acoustique comprenant un transducteur acoustique selon l'une des revendications précédentes.

9. Sonar destiné à recevoir des ondes de pression acoustiques transmises par l'eau, **caractérisé en ce que** le sonar comporte un transducteur acoustique selon l'une des revendications 1 à 7 ou un dispositif à transducteur acoustique selon la revendication 8.

10. Engin nautique, notamment sous-marin, qui comporte un sonar selon la revendication 9.
